# EUROPÄISCHE PATENTSCHRIFT

(11) **EP 1 846 485 B1**
(45) Veröffentlichungstag und Bekanntmachung des Hinweises auf die Patenterteilung: **18.06.2008**
(21) Anmeldenummer: 06708005.1
(22) Anmeldetag: 03.02.2006
(51) Int. Cl.: C08J 9/224

(54) **VERFAHREN ZUR BESCHICHTUNG VON EXPANDIERBAREN STYROLPOLYMEREN-GRANULATEN**
METHOD FOR COATING EXPANDABLE STYRENE POLYMER GRANULES
PROCEDE POUR REVETIR DES GRANULES DE POLYSTYRENE EXPANSIBLE

(30) Priorität: 04.02.2005 DE 102005005495
(43) Veröffentlichungstag der Anmeldung: 24.10.2007
(73) Patentinhaber: BASF SE, 67056 Ludwigshafen (DE)
(72) Erfinder: ALLMENDINGER, Markus, 67480 Edenkoben (DE); HAHN, Klaus, 67281 Kirchheim (DE); RUCH, Joachim, 67157 Wachenheim (DE); EHRMANN, Gerd, 67146 Deidesheim (DE); SCHMIED, Bernhard, 67227 Frankenthal (DE)
(86) Internationale Anmeldenummer: PCT/EP2006/050649
(87) Internationale Veröffentlichungsnummer: WO 2006/082232

(56) Entgegenhaltungen:
- EP-A- 0 449 065
- EP-A- 0 912 620

## Beschreibung

Die Erfindung betrifft ein Verfahren zur Herstellung von beschichteten, expandierbaren Styrolpolymer (EPS)-Granulaten durch Extrusion einer Treibmittel-haltigen Styrolpolymerschmelze durch eine Düsenplatte mit anschließender Unterwassergranulation, wobei die EPS-Granulate durch in Wasser lösliche, emulgierbare oder suspendierbare Beschichtungsmittel im Wasserkreislauf des Unterwassergranulators beschichtet werden.

Hydrophob ausgerüstete, expandierbare Polystyrolpartikel zur Perimeterdämmung sind beispielsweise aus WO 97/43334 und EP-A 913 423 bekannt. Die Hydrophobierungsmittel werden hierbei auf die EPS-Partikel unmittelbar nach der Aufarbeitung und Trocknung auf Kieselgel adsorbiert aufgebracht.

Aufgabe der vorliegenden Erfindung eine einfaches und kostengünstiges Verfahren zur gleichmäßigen Beschichtung von EPS-Partikeln zu finden, das auch ohne Adsorption auf Trägersubstanzen durchführbar ist.

Demgemäß wurde das eingangs beschriebene Verfahren gefunden.

Als Beschichtungsmittel eigenen sich amphiphile oder hydrophobe organische Verbindung. Unter den hydrophoben organischen Verbindungen sind insbesondere C₁₀ - C₃₀-Parafinwachse, Umsetzungsprodukte aus N-Methylolamin und einem Fettsäurederivate, Umsetzungsprodukte eines C₉-C₁₁-Oxoalkohols mit Ethylenoxid, Propylenoxid oder Butylenoxid oder Polyfluoralkyl(meth)acrylate oder Mischungen davon zu nennen, die vorzugsweise in Form wässriger Emulsionen eingesetzt werden können.

Bevorzugte Hydrophobierungsmittel sind Paraffinwachse mit 10 bis 30 C-Atomen in der Kohlenstoffkette, die vorzugsweise einen Schmelzpunkt zwischen 10 und 70°C, insbesondere zwischen 25 und 60°C, aufweisen. Derartige Paraffinwachse sind beispielsweise in den BASF-Handelsprodukten RAMASIT KGT, PERSISTOL E und PERSISTOL HP sowie in AVERSIN HY-N von Henkel und CEROL ZN von Sandoz enthalten.

Eine andere Klasse geeigneter Hydrophobierungsmittel sind harzartige Umsetzungsprodukte von einem N-Methylolamin mit einem Fettsäurederivat, z.B. einem Fettsäureamid, -amin oder -alkohol, wie sie z.B. in US-A 2 927 090 oder GB-A 475 170 beschrieben sind. Ihr Schmelzpunkt liegt im allgemeinen bei 50 bis 90°C. Derartige Harze sind z.B. in dem BASF-Handelsprodukt PERSISTOL HP und in ARCOPHOB EFM von Hoechst enthalten.

Schließlich sind auch Polyfluoralkyl(meth-)acrylate geeignet, beispielsweise Polyperfluoroctylacrylat. Diese Substanz ist in dem BASF-Handelsprodukt PERSISTOL O und in OLEOPHOBOL C von Pfersee enthalten.

Als amphiphile Beschichtungsmittel kommen Antistatika, wie Emulgator K30 (Gemisch aus sekundären Natriumalkansulfonaten) oder Glycerinstearate, wie Glycerinmonostearat GMS oder Glycerintristearat in Betracht.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Beschichtung der erhaltenen expandierbaren Styrolpolymer (EPS)-Granulate erfolgt erfindungsgemäß durch in Wasser lösliche, emulgierbare oder suspendierbare Beschichtungsmittel im Granulator.

Ein besonders bevorzugtes Verfahren zur Herstellung von expandierbaren Styrolpolymeren, umfasst die Schritte
a) Polymerisation von Styrolmonomer und gegebenenfalls copolymersierbaren Monomeren,
b) Entgasung der erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
d) Kühlen der treibmittelhaltigen Styrolpolymerschmelze auf eine Temperatur, die mindestens 120°C, bevorzugt 150 - 200°C beträgt,
e) gegebenenfalls Zugabe von Additiven oder Füllstoffen,
f) Austrag durch eine Düsenplatte mit Bohrungen, deren Durchmesser am Düsenaustritt höchstens 1,5 mm beträgt und
g) Granulieren der treibmittelhaltigen Schmelze direkt hinter der Düsenplatte unter Wasser in Gegenwart einer Lösung, Emulsion oder Suspension des Beschichtungsmittels.

Variabler Gegendruck im UWG gibt die Möglichkeit gezielt sowohl kompakte als auch angeschäumte Granulate herzustellen. In der Regel erfolgt die Granulierung bei einem Druck im Bereich von 1 bis 25 bar, bevorzugt 5 bis 15 bar. Auch bei Einsatz von Nukleierungsmitteln bleibt das Anschäumen an den Düsen des UWG kontrollierbar.

Die EPS-Granulate werden in der Regel mit 0,01 bis 0,5 Gew.-%, vorzugsweise 0,1 bis 0,3 Gew.-%, jeweils bezogen auf den Feststoffgehalt, des Beschichtungsmittels beschichtet. Die aufgebrachte Menge des Beschichtungsmittels kann z. B über die Konzentration im Wasserkreislauf eingestellt werden. Das Beschichtungsmittel wird im Wasserkreislauf des Unterwassergranulators in der Regel in Mengen im Bereich von 0,05 bis 20 Gew.-%, bevorzugt im Bereich von 0,1 bis 10 Gew.-%, bezogen auf Feststoffgehalt im Wasser, eingesetzt. Für eine konstante Beschichtungsqualität, sollte die Konzentration des Beschichtungsmittels im Kreislaufwasser konstant gehalten werden, beispielsweise über eine konstante Dosierung des Beschichtungsmittels entsprechend dem Austrag über das beschichtete EPS.

Die Temperatur des Wasserkreislaufs im Unterwassergranulator sollte unter der Glasübergangstemperatur des Styrolpolymeren liegen, damit das EPS-Granulat nur an der Oberfläche beschichtet und nicht vollständig imprägniert wird. Vorzugsweise liegt die Temperatur im Bereich von 5° bis 80°C, insbesondere im Bereich von10° bis 60°C.

Die erfindungsgemäßen expandierten Polystyrolpartikel können mit Vorteil zur Herstellung von solchen Formteilen eingesetzt werden, die ständiger Wassereinwirkung ausgesetzt sind, z.B. für Platten für die Dachisolierung oder Perimeterdämmung, für Schwimmkörper oder wasserempfindliche Verpackungsmaterialien, wie Fischkisten.

Die in den Beispielen genannten Teile und Prozente beziehen sich auf das Gewicht.

Die Wasseraufnahme wurde nach DIN 53 433 gemessen, die Wasserdurchlässigkeit nach folgender Methode: Auf eine Schaumstoffplatte einer Dicke von 100 mm wurde ein Rohr von 100 mm Durchmesser geklebt und mit einer Wassersäule von 100 mm Höhe gefüllt.

Nach 24 Stunden wurde geprüft, ob auf der Unterseite der Schaumstoffplatte ein Wasseraustritt zu beobachten ist. Das Absenken des Wasserspiegels wurde in mm Wassersäule gemessen. Vor den Versuchen wurden die Schaumstoffplatten 24 Stunden im Trockenschrank bei 60°C konditioniert. Danach wurden die Rohre mittels Silikonkautschuk aufgeklebt.

### Beispiele:

Beschichtungsmittel:
- Persistol HP =: Hydrophobierungsmittel der BASF, wässrige Emulsion mit 22,8 % Paraffin, (Schmp. 52-54°C) und 9,6 % Harz aus N-Methylolmelamin und Stearylamid (Schmp. 70°C)
- Ramasit KGT =: Hydrophobierungsmittel der BASF, wässrige Emulsion mit 16,6 % Paraffin (Schmp. 52-54°C)
- Plurafac LF=: Umsetzungsprodukt von Ethylenoxid und Butylenoxid mit einem C₉-C₁₁-Oxoalkohol

### Beispiele 1 bis 3

Für die Beispiele wurde eine Polystyrolschmelze aus Polystyrol mit einer Viskositätszahl VZ von 75 ml/g (M_{w} = 185.000 g/mol, Uneinheitlichkeit M_{w}/Mₙ = 2,6) eingesetzt, in die 6 Gew.-% n-Pentan eingemischt wurden. Die treibmittelhaltige Schmelze wurde von ursprünglich 260 °C auf eine Temperatur von 190 °C abgekühlt.

Das Gemisch aus Polystyrolschmelze, Treibmittel und Flammschutzmittel wurde mit 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt.

Das Kühlwasser der Unterwassergranulierung lag als 0,5 bis 10 gew.-%ige wässrige Emulsion der in Tabelle 1 aufgeführten flüssigen Beschichtungs- bzw. Hydrophobierungsmittel vor. Um eine konstante Beschichtungsqualität zu erhalten, war es erforderlich die Konzentration des Beschichtungsmittels im Wasser konstant zu halten. Dies erfolgte über die konstante Dosierung des Beschichtungsmittels in Größe des Verluststroms mit einer Kolbenmembranpumpe direkt in den zirkulierenden Wasserkreislauf. Die Wasserverluste wurden über einen gedrosselten Zufluss direkt in den Wassertank kompensiert.

Diese Granulate wurden in strömendem Wasserdampf zu Schaumstoffperlen (20 g/l) vorgeschäumt, 24 Stunden zwischengelagert und anschließend in gasdichten Formen mit Wasserdampf zu Schaumstoffkörpern verschweißt.

### Vergleichsversuch V1

Der Vergleichsversuch wurde wie die Beispiele durchgeführt, jedoch erfolge die Unterwassergranulierung ohne Hydrophobierungsmittel im zirkulierenden Wasserkreislauf.

**Tabelle 1**

| Beispiel | Hydrophobierungsmittel [Gew.-% auf EPS Roh-produkt] | Wasseraufnahme [Vol.-%] | Wasserdichtigkeit [mm] |
|---|---|---|---|
| V1 | - | 5,8 | 28 |
| 1 | 0,1 Persistol HP | 0,9 | 5 |
| 2 | 0,25 Persistol HP | 0,2 | 2 |
| 3 | 0,25 Ramasit KGT | 0,2 | 0,5 |
| 4 | 0,2 Plurafac LF 120 | 0,9 | 9 |

## Patentansprüche

1. Verfahren zur Herstellung von beschichteten, expandierbaren Styrolpolymeren (EPS)-Granulaten durch Extrusion einer Treibmittel-haltigen Styrolpolymerschmelze durch eine Düsenplatte mit anschließender Unterwassergranulation, **dadurch gekennzeichnet, dass** die EPS-Granulate durch in Wasser lösliche, emulgierbare oder suspendierbare Beschichtungsmittel im Wasserkreislauf des Unterwassergranulators beschichtet werden.

2. Verfahren nach Anspruch 1, **dadurch gekennzeichnet, dass** als Beschichtungsmittel eine amphiphile oder hydrophobe organische Verbindung eingesetzt wird.

3. Verfahren nach Anspruch 2, **dadurch gekennzeichnet, dass** als Beschichtungsmittel eine wässrige Emulsion eines C₁₀ - C₃₀- Paraffinwachses, eines Umsetzungsproduktes aus N-Methylolamin und einem Fettsäurederivate oder einem Polyfluoralkly(meth)acrylat oder Mischungen davon eingesetzt wird.

4. Verfahren nach einem der Ansprüche 2, **dadurch gekennzeichnet, dass** als Beschichtungsmittel das Umsetzungsprodukt eines C₉-C₁₁-Oxoalkohols mit Ethylenoxid, Propylenoxid oder Butylenoxid.

5. Verfahren nach einem der Ansprüche 2, **dadurch gekennzeichnet, dass** als Beschichtungsmittel ein Antistatikum eingesetzt wird.

6. Verfahren nach einem der Ansprüche 2, **dadurch gekennzeichnet, dass** als Beschichtungsmittel ein Glycerinstearat eingesetzt wird.

7. Verfahren nach einem der Ansprüche 1 bis 6, **dadurch gekennzeichnet, dass** die Menge des Beschichtungsmittels im Wasserkreislauf des Unterwassergranulators im Bereich von 0,05 bis 20 Gew.-%, bezogen auf Feststoffgehalt im Wasser, beträgt.

8. Verfahren nach einem der Ansprüche 1 bis 7, **dadurch gekennzeichnet, dass** die Temperatur des Wasserkreislaufs im Unterwassergranulator im Bereich von 5° bis 80°C beträgt.

## Claims

1. A process for producing coated, expandable styrene polymer (EPS) granules by extrusion of a styrene polymer melt comprising blowing agent through a die plate with subsequent underwater pelletization, wherein the EPS granules are coated with coating agents which are soluble, emulsifiable or suspendable in water in the water circuit of the underwater pelletizer.

2. The process according to claim 1, wherein an amphiphilic or hydrophobic organic compound is used as coating agent.

3. The process according to claim 2, wherein an aqueous emulsion of a C₁₀-C₃₀-paraffin wax, a reaction product of N-methylolamine and a fatty acid derivative or a polyfluoroalkyl (meth)acrylate or a mixture thereof is used as coating agent.

4. The process according to claim 2, wherein the reaction product of a C₉-C₁₁-oxo alcohol with ethylene oxide, propylene oxide or butylene oxide is used as coating agent.

5. The process according to claim 2, wherein an antistatic is used as coating agent.

6. The process according to claim 2, wherein a glyceryl stearate is used as coating agent.

7. The process according to any of claims 1 to 6, wherein the amount of coating agent in the water circuit of the underwater pelletizer is in the range from 0.05 to 20% by weight, based on the solids content in the water.

8. The process according to any of claims 1 to 7, wherein the temperature of the water circuit in the underwater pelletizer is in the range from 5° to 80°C.

## Revendications

1. Procédé de fabrication de granulés de polymères à base de styrène expansés (EPS) revêtus par extrusion d'une masse fondue de polymères à base de styrène contenant un agent propulseur à travers une plaque de buses suivie d'une granulation immergée, **caractérisé en ce que** les granulés EPS sont revêtus d'un agent de revêtement hydrosoluble, émulsifiable ou pouvant être mis en suspension dans le circuit d'eau du granulateur immergé.

2. Procédé selon la revendication 1, **caractérisé en ce qu'**on utilise un composé organique hydrophobe ou amphiphile comme agent de revêtement.

3. Procédé selon la revendication 2, **caractérisé en ce qu'**on utilise une émulsion aqueuse d'une cire de paraffine en C₁₀-C₃₀, d'un produit de transformation à base de N-méthylolamine et d'un dérivé d'acide gras ou d'un polyfluoroalkyl(méth)acrylate ou de mélanges de ceux-ci.

4. Procédé selon la revendication 2, **caractérisé en ce que** le produit de transformation d'un oxoalcool en C₉-C₁₁ avec de l'oxyde d'éthylène, de l'oxyde de propylène ou de l'oxyde de butylène est utilisé comme agent de revêtement.

5. Procédé selon la revendication 2, **caractérisé en ce qu'**un antistatique est utilisé comme agent de revêtement.

6. Procédé selon la revendication 2, **caractérisé en ce qu'**un stéarate de glycérine est utilisé comme agent de revêtement.

7. Procédé selon l'une des revendications 1 à 6, **caractérisé en ce que** la quantité d'agent de revêtement dans le circuit d'eau du granulateur immergé est située dans la plage de 0,05 à 20 % en poids, par rapport à la proportion de substance solide dans l'eau.

8. Procédé selon l'une des revendications 1 à 7, **caractérisé en ce que** la température du circuit d'eau dans le granulateur immergé va de 5° à 80°C.
